# EUROPÄISCHE PATENTSCHRIFT

(11) **EP 0 665 872 B1**
(45) Veröffentlichungstag und Bekanntmachung des Hinweises auf die Patenterteilung: **12.06.1996**
(21) Anmeldenummer: 93921810.3
(22) Anmeldetag: 11.10.1993
(51) Int. Cl.: C10K 1/02, C10K 1/16, B01D 53/14

(54) **VERFAHREN UND EINRICHTUNG ZUM REINIGEN VON BRENNBAREM GAS**
PROCESS AND ARRANGEMENT FOR SCRUBBING FUEL GAS
PROCEDE ET DISPOSITIF POUR L'EPURATION DE GAZ COMBUSTIBLE

(30) Priorität: 23.10.1992 DE 4235894
(43) Veröffentlichungstag der Anmeldung: 09.08.1995
(73) Patentinhaber: SIEMENS AKTIENGESELLSCHAFT, D-80333 München (DE)
(72) Erfinder: BAUMGÄRTEL, Gerd, D-91341 Röttenbach (DE); TRATZ, Herbert, D-91242 Ottensoos (DE)
(86) Internationale Anmeldenummer: DE9300959
(87) Internationale Veröffentlichungsnummer: WO9410266

(56) Entgegenhaltungen:
- DE-A- 2 701 800
- DE-B- 1 017 737
- FR-A- 2 235 731
- GB-A- 983 391

## Beschreibung

Die Erfindung betrifft ein Verfahren zum Reinigen von brennbarem Gas, insbesondere von Schwelgas, wobei das Gas gewaschen und als Reingas abgeleitet wird und wobei Kondensat abgeleitet wird. Die Erfindung betrifft auch eine Einrichtung zum Reinigen von brennbarem Gas, insbesondere von Schwelgas, mit einem Gaswäscher, der eine Zuleitung für das Gas, eine Zuleitung für ein Waschmedium und eine Ableitung für Kondensat aufweist und mit einer Ableitung für gewaschenes Gas (Reingas) in Verbindung steht.

Ein Verfahren und eine Einrichtung zur Reinigung von Pyrolysegas ist aus der DE 27 01 800 A1 bekannt. Dabei wird angestrebt, ein möglichst reines Gas zu bekommen. Das Gas soll weder Öl, noch Teer, noch Wasser enthalten. Dazu wird das Pyrolysegas in einem Gaswäscher gewaschen, wobei als Waschmedium ein Waschöl dient, das im Gaswäscher auskondensiert und wieder verwendet wird. Zum Anfahren der Anlage ist eine bestimmte Menge Waschöl bereitzustellen. Das Kondensat, das als Waschöl nicht benötigt wird, wird in einem Pyrolysereaktor verbrannt. Das Gas, das den Gaswäscher verläßt, ist frei von Öl und Teer. Es wird danach in einem Schüttbettreaktor weiter behandelt. Das gereinigte Gas wird als Heizgas über ein Gebläse dem Heizgasbrenner des Pyrolysereaktors zugeführt. Dort ist, da das gereinigte Gas noch Staub enthält, die Heizleistung durch einen Staubniederschlag beeinträchtigt.

Beim Bekannten wird dem Heizgasbrenner ein sehr reines, aber noch Staub enthaltendes Gas zugeführt. Das bekannte Verfahren und die Einrichtung dazu sind darauf abgestellt, einen guten Reinigungserfolg zu erzielen. Ein solches reines Heizgas hat jedoch einen relativ geringen Heizwert, der durch den Staubanteil weiter verringert ist. Darüber hinaus fallen bei der Reinigung Stoffe an, die in aufwendigen, besonders zu diesem Zweck notwendigen Anlagen weiter behandelt werden müssen. Beispielsweise sind zur Weiterverarbeitung des Filterückstandes aus dem Schüttbettreaktor ein Sieb und eine Brennkammer erforderlich. Dabei fallen im Sieb erneut Rückstände an, die entsorgt werden müssen.

Der Erfindung lag die Aufgabe zugrunde,+ein Verfahren und eine Einrichtung anzugeben, die ein Gas zur Verfügung stellen, das weitgehend staubfrei ist und trotzdem einen möglichst hohen Heizwert aufweist.

Die Aufgabe, ein Verfahren anzugeben, wird gemäß der Erfindung dadurch gelöst, daß das Kondensat destilliert wird und daß die flüchtigen Bestandteile dem Reingas beigemischt und die nichtflüchtigen Bestandteile abgeleitet werden.

Durch die Destillation von Kondensat wird der größte Teil, der brennbaren Bestandteile des Kondensats, nämlich die flüchtigen Bestandteile, in die Gasform überführt. Diese flüchtigen Bestandteile haben einen sehr hohen Heizwert. Dadurch, daß die flüchtigen Bestandteile aus der Destillation dem Reingas zugemischt werden, bekommt man ein Gasgemisch, das vorteilhafterweise einen sehr hohen Heizwert hat. Ursprünglich im Gas enthaltener Staub gelangt im Waschprozess in das Kondensat. Beim Destillieren verbleibt der Staub bei den nicht flüchtigen Bestandteilen. Diese werden abgeleitet und können verbrannt werden. Der Staub kann also den Heizwert des Gasgemischs nicht beeinträchtigen.

Das im Kondensat enthaltene Wasser muß nicht abgeleitet werden, was Abwassserprobleme mit sich bringen würde. Das Wasser wird spätestens bei der Destillation in Dampf übergeführt, der dem Reingas beigemischt wird. Durch diesen Dampfanteil wird der Heizwert des Reingases nur unwesentlich beeinflußt. Die Wassermenge des Dampfanteils ist nämlich relativ klein im Vergleich zur Wassermenge der ohnehin im Gas vorhandenen Feuchte.

Mit dem Verfahren nach der Erfindung wird der Vorteil erzielt, daß bei der Reinigung eines brennbaren Gases keine Stoffe, wie Filterstäube oder Abwasser, anfallen, die entsorgt werden müßten. Ein besonderer Vorteil ist darin zu sehen, daß man ein gereinigtes Reingas erhält, das entstaubt ist und einen sehr hohen Heizwert aufweist. Vorteilhafterweise ist das Reingas vom Staub befreit, während andere Stoffe, die den Heizwert anheben können, Bestandteile des Reingases bleiben. Bedingt durch die Entstaubung kann es auch nicht zu Verstopfungen von Heizgasleitungen kommen.

Neben dem Reingas bleiben nur die nicht flüchtigen Bestandteile aus der Destillation übrig, die verschwelt oder verbrannt werden können, wobei das Reingas als Heizgas Wärmeenergie dafür liefern kann. Nur zum Anfahren ist dann ein externes Heizgas nötig.

Das zu reinigende brennbare Gas kann ein Teil eines bei einem Schwelvorgang gebildeten Schwelgases sein.

Beispielsweise wird das Kondensat in eine schwere und eine leichte Fraktion getrennt. Das Gas wird dann mit der leichten Fraktion gewaschen und die schwere Fraktion, sowie der überschüssige Teil der leichten Fraktion werden destilliert. Wenn nur die leichte Fraktion des Kondensats als Waschmedium verwendet wird, müssen keine schweren Bestandteile des Kondensats, die beispielsweise Staub enthalten, umgepumpt werden, was eine zusätzliche Belastung von Anlagenteilen mit Staub bedeuten würde.

Die Aufgabe eine geeignete Einrichtung zum Reinigen von brennbarem Gas anzugeben, wird gemäß der Erfindung dadurch gelöst, daß die Ableitung für Kondensat mit einer Destillationsvorrichtung in Verbindung steht, von der eine Leitung für flüchtige Bestandteile und eine Leitung für nicht flüchtige Bestandteile ausgeht, und daß die Leitung für flüchtige Bestandteile mit der Ableitung für gewaschenes Gas (Reingas) verbunden ist.

Damit wird der Vorteil erzielt, daß die bei der Destillation flüchtigen Bestandteile des Kondensats zur Steigerung des Heizwertes des Reingases dienen, dem sie beigemischt werden. Das Reingas ist vorteilhafterweise staubfrei. Verbleibende Reststoffe werden nur über die Leitung für nicht flüchtige Bestandteile abgegeben. Diese Reststoffe, die auch den vom Gas getrennten Staub umfassen, können jedoch verschwelt oder verbrannt werden.

Beispielsweise ist die Leitung für nicht flüchtige Bestandteile mit einer Schwelvorrichtung und/oder mit einer Brennvorrichtung verbunden. Diese Schwelvorrichtung kann ein Schwelgas liefern, das das in der Einrichtung nach der Erfindung zu reinigende brennbare Gas sein kann.

Beispielsweise ist die Ableitung für gewaschenes Gas (Reingas) mit einem Heizgasbrenner verbunden. Dieser Heizgasbrenner kann Teil der genannten Schwelvorrichtung oder Brennvorrichtung sein.

Die Einrichtung nach der Erfindung kann also ein Teil eines weitgehend geschlossenen Systems sein. Dabei kann ein Teilstrom des Schwelgases, das aus einer Schwelvorrichtung stammt, gereinigt werden, wobei ausschließlich nur ein staubfreies Reingas und nicht flüchtige bei einer Destillation anfallende Stoffe übrigbleiben. Diese Stoffe können in der Schwelvorrichtung verschwelt werden. Das Reingas kann in einem Heizgasbrenner verbrannt werden und kann zur Beheizung der Schwelvorrichtung dienen. Außer Schwelreststoff und überschüssigem Schwelgas fallen keine zu entsorgenden Abfallstoffe an.

Die Schwelvorrichtung kann eine Schweltrommel einer als solche, z. B. aus der EP-0 302 310 B1, bekannten Schwel-Brenn-Anlage sein.

Beispielsweise ist die Ableitung für Kondensat aus dem Gaswäscher mit einem Absetzbehälter verbunden. In diesem Absetzbehälter sammelt sich das Kondensat an. Dabei setzen sich die schwereren Bestandteile ab. Die leichteren Bestandteile überschichten die schwereren Bestandteile. Die schwereren Bestandteile enthalten vorwiegend den Staub und die leichteren Bestandteile sind Wasser und/oder Öl.

Im mittleren Bereich des Absetzbehälters zweigt die Zuleitung des Gaswäschers für Waschmedium ab. Dadurch ist gewährleistet, daß leichtere Bestandteile des Kondensats, die keinen Staub enthalten, als Waschmedium in den Gaswäscher gelangen. Eine Ableitung für überschüssiges Kondensat geht unten vom Absetzbehälter aus. Durch diese Ableitung werden die schwereren Bestandteile des Kondensats, die Staub enthalten, abgeleitet. Die Ableitung für gewaschenes Gas geht oben vom Absetzbehälter aus.

Mit dem Einsatz eines Absetzbehälters wird vorteilhafterweise gewährleistet, daß leichtere Bestandteile des Kondensats, die von Staub weitgehend frei sind, als Waschmedium dem Gaswäscher zugeleitet werden können.

Beispielsweise ist die vom Absetzbehälter ausgehende Ableitung für überschüssiges Kondensat mit einem Hydrozyklon verbunden, von dem eine Ableitung für eine leichtere Fraktion und eine Ableitung für eine schwerere Fraktion ausgehen. Die Ableitung für eine leichtere Fraktion mündet in den oberen Teil des Absetzbehälters. Die Ableitung für eine schwerere Fraktion mündet in den unteren Teil des Absetzbehälters. In dem Hydrozyklon wird das zugeleitete Kondensat erneut getrennt. Man erzielt eine noch bessere Aufteilung in einen leichteren, reineren Anteil und einen schwereren, staubbeladenen Anteil. Der leichtere Anteil gelangt von oben in den Absetzbehälter, während der schwerere Anteil in den unteren Teil des Absetzbehälters gelangt. Damit werden vorteilhafterweise die im Hydrozyklon separierten Fraktionen den entsprechenden Kondensatmengen im Absetzbehälter zugeführt. Eine erneute Durchmischung im Absetzbehälter ist dadurch weitgehend ausgeschlossen. Mit dem Einsatz des Hydrozyklons erreicht man vorteilhafterweise eine noch weiter verbesserte Auftrennung des Kondensats in einen schwereren und einen leichteren Anteil.

Beispielsweise weist der Absetzbehälter eine Hauptkammer und eine Nebenkammer auf. Die Ableitung des Hydrozyklons für die schwerere Fraktion mündet in den unteren Teil der Nebenkammer. Diese weist einen in die Hauptkammer mündenden Überlauf auf und ist unten mit einer Ableitung für überschüssiges Kondensat verbunden. Damit wird der Vorteil erzielt, daß drei Trennstufen für das Kondensat hintereinander vorhanden sind. Nachdem sich ein schwererer Anteil des Kondensats in der Hauptkammer des Absetzbehälters abgesetzt hat, gelangt dieser schwerere Anteil in den Hydrozyklon. Die dort abgeschiedene schwerere Franktion gelangt in die Nebenkammer des Absetzbehälters, wo erneut ein Absetzvorgang erfolgt. Von dort fließt der leichtere Teil des Kondensats über den Überlauf in die Hauptkammer und der schwerere Teil wird, beispielsweise in die Destillationsvorrichtung abgegeben. Durch den Einsatz eines Absetzbehälters, der eine Hauptkammer und eine Nebenkammer aufweist, wird die Aufteilung des Kondensats noch weiter verbessert.

Mit dem Verfahren und der Einrichtung gemäß der Erfindung wird der Vorteil erzielt, daß das gereinigte Gas einen sehr hohen Heizwert hat, weil es vom Staub, der den Heizwert senken kann, befreit wird, und weil einen hohen Heizwert bewirkende Stoffe durch eine Destillation gewonnen und dem Reingas beigemischt werden. Außerdem wird der Vorteil erzielt, daß keine Abfallstoffe, die einer besonderen Behandlung bedürften, anfallen. Es fällt weder Abwasser an, noch ein Stoff, der nicht einer Brennanlage, beispielsweise einer Schweltrommel, zugeleitet werden könnte. Bei Temperaturen über 100° C in der Destillationsvorrichtung gelangt auch eventuell vorhandenes Wasser in Dampfform in den Reingasstrom. Der Heizwert des Reingases wird durch die geringen Mengen Wasserdampf nicht beeinträchtigt, weil das Gas ohnehin feucht ist. Es wird jedoch der Vorteil erzielt, daß kein Abwasser anfällt. Insbesondere wird außer für das Anfahren der Anlage kein Fremdmedium zum Reinigen des brennbaren Gases benötigt.

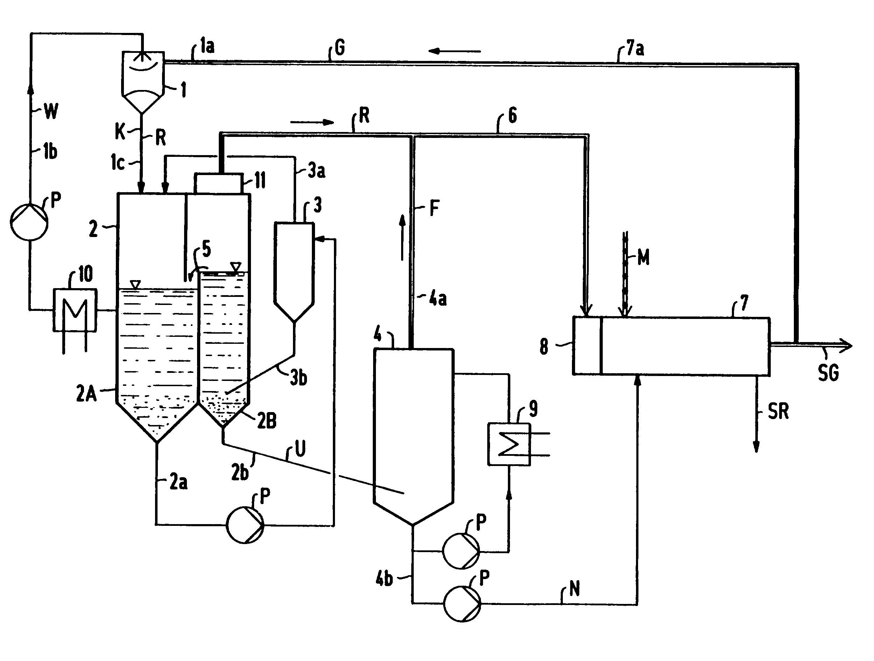

Eine Ausführungsform der Einrichtung nach der Erfindung, mit der das Verfahren nach der Erfindung durchgeführt werden kann, wird anhand der Zeichnung näher erläutert:

Das zu reinigende, brennbare Gas G kann beispielsweise das gesamte oder ein Teil des Schwelgases SG aus einer als solchen bekannten Schweltrommel 7 sein, das über eine Schwelgasleitung 7a, die von der Schweltrommel 7 ausgeht, herangeführt wird. Das brennbare Gas G gelangt über eine Zuleitung la, die mit der Schwelgasleitung 7a verbunden sein kann, in einen Gaswäscher 1, der ein Venturi-Wäscher sein kann. Der Gaswäscher 1 weist auch eine Zuleitung 1b für ein Waschmedium W und eine Ableitung lc für Kondensat K und Reingas R auf. Diese steht über eine Abscheidevorrichtung 11 für Kondensat-Aerosole mit einer Ableitung 6 für gewaschenes Gas (Reingas) R in Verbindung.

Die Ableitung 1c des Gaswäschers 1 ist mit einem Absetzbehälter 2 verbunden. Dort setzen sich schwerere Bestandteile des Kondensats K ab. Diese schwereren Bestandteile enthalten viel Staub, während die überschichteten, leichteren Bestandteile nur wenig Staub enthalten und aus Öl und Wasser bestehen können. Falls die Temperatur im Absetzbehälter 2 über 100° C ist, besteht der leichtere Anteil des Kondensats K nur aus Öl. Etwa in der Mitte des Absetzbehälters 2 geht von ihm die Zuleitung 1b des Gaswäschers 1 für das Waschmedium W aus. Dadurch gelangt ein Teil der leichteren, staubarmen Bestandteile des Kondensats K als Waschmedium W in den Gaswäscher 1. Der Zuleitung 1b kann eine Kühlvorrichtung 10 zugeordnet sein. Vom Absetzbehälter 2 geht unten eine Ableitung 2a für den schwereren Anteil des Kondensats K aus. Auch das überschüssige leichtere Kondensat K wird über die Ableitung 2a abgegeben. Vom Absetzbehälter 2 geht oben die Ableitung 6 für gewaschenes Gas (Reingas) R aus. Die Ableitung 2a für Kondensat K kann mit einem Hydrozyklon 3 verbunden sein. Dort wird das Kondensat K weiter getrennt. Eine leichtere Fraktion gelangt über eine Ableitung 3a von oben in den Absetzbehälter 2. Eine schwerere Fraktion gelangt über eine Ableitung 3b in den unteren Teil des Absetzbehälters 2. Die beiden Fraktionen werden dadurch an geeigneter Stelle in den Absetzbehälter 2 zurückgespeist.

Beispielsweise kann der Absetzbehälter 2, eine Hauptkammer 2A und eine Nebenkammer 2B aufweisen. Die schwerere Fraktion aus dem Hydrozyklon 3 wird dann über die Ableitung 3b in den unteren Teil der Nebenkammer 2B eingespeist. Dort findet ein dritter Trennvorgang im Kondensat K statt. Der leichtere Anteil fließt an einem Überlauf 5 von der Nebenkammer 2B in die Hauptkammer 2A. Das nach drei Trennvorgängen verbleibende überschüssige Kondensat U gelangt über eine Ableitung 2b in eine Destillationsvorrichtung 4. Die Ableitung 6 für das Reingas R kann vom oberen Teil der Nebenkammer 2B des Absetzbehälters 2 ausgehen. Der Nebenkammer 2B nachgeschaltet und der Ableitung 6 vorgeschaltet, kann eine Abscheidevorrichtung 11 für Kondensat-Aerosole angeordnet sein.

In der durch eine Heizung 9 beheizten Destillationsvorrichtung 4 werden die flüchtigen Bestandteile F des überschüssigen Kondensats U von dessen nicht flüchtigen Bestandteilen N getrennt. Eine Leitung 4a für flüchtige Bestandteile F geht vom oberen Teil der Destillationsvorrichtung 4 aus und mündet in die Ableitung 6 für gewaschenes Gas (Reingas) R. Eine Leitung 4b für nicht flüchtige Bestandteile N geht vom unteren Teil der Destillationsvorrichtung 4 aus. Die nicht flüchtigen Bestandteile N enthalten den gesamten, aus dem zu reinigenden brennbaren Gas G entfernten Staub. Darüber hinaus enthalten die nicht flüchtigen Bestandteile N auch teerartige Stoffe. Die nicht flüchtigen Bestandteile N sind brennbar und können beispielsweise in einer Schweltrommel 7 einer als solchen bekannte Schwel-Brenn-Anlage verschwelt werden. Dazu kann die Leitung 4b mit der Schweltrommel 7 verbunden sein. Das mit den flüchtigen Bestandteilen F angereicherte Reingas R kann als Heizgas für die Schweltrommel 7 dienen. Die Ableitung 6 für Reingas R ist dazu mit einem Heizgasbrenner 8 verbunden, der Bestandteil der Schweltrommel 7 ist. Im Heizgasbrenner 8 wird das Reingas R verbrannt. Die dadurch bereitgestellte Wärmeenergie dient zur Erwärmung der Schweltrommel 7.

Die Beheizung der Destillationsvorrichtung 4 erfolgt durch Beheizung einer umgewälzten Flüssigkeitsphase in einem Wärmetauscher 9. In allen Leitungen können zur Beförderung des Mediums Pumpen P vorhanden sein.

Die gezeigte Einrichtung gibt weder Abwasser noch Abgas ab. Die nicht flüchtigen Bestandteile N des überschüssigen Kondensats U können problemlos in der Schweltrommel 7 verschwelt werden. Die flüchtigen Bestandteile F des überschüssigen Kondensats U steigern den Heizwert des staubfreien Reingases R, so daß dieses als Heizgas für die Schweltrommel 7 eingesetzt werden kann. Zum Entfernen des Staubes aus dem zu reinigenden Gas G wird außer beim Anfahren der Anlage kein Fremdmedium benötigt. Das Waschmedium W für das Gas G wird aus dem Kondensat K gewonnen. In Verbindung mit einer Schweltrommel 7 fallen keine zusätzlichen Abfallstoffe an. Bei üblicher Zuführung von Hausmüll M oder anderen Abfallstoffen in die Schweltrommel 7 werden von dieser Schwelreststoff SR und überschüssiges Schwelgas SG abgegeben, die in bekannter Weise in einer als solche bekannten Schwel-Brenn-Anlage weiterverarbeitet werden können.

## Patentansprüche

1. Verfahren zum Reinigen von brennbarem Gas (G), insbesondere von Schwelgas (SG), wobei das Gas (G) gewaschen und als Reingas (R) abgeleitet wird und wobei Kondensat (K) abgeleitet wird, **dadurch gekennzeichnet**, daß das Kondensat (K, U) destilliert wird und daß die flüchtigen Bestandteile (F) dem Reingas (R) beigemischt und die nicht flüchtigen Bestandteile (N) abgeleitet werden.

2. Verfahren nach Anspruch 1, **dadurch gekennzeichnet,** daß die nicht flüchtigen Bestandteile (N) verschwelt oder verbrannt werden und daß das Reingas (R) als Heizgas Wärmeenergie dafür liefert.

3. Verfahren nach einem der Ansprüche 1 oder 2, **dadurch gekennzeichnet,** daß das Kondensat (K) in eine schwere und eine leichte Fraktion getrennt wird, daß das Gas (G) mit der leichten Fraktion gewaschen wird und daß die schwere Fraktion und die überschüssige leichte Fraktion destilliert werden.

4. Einrichtung zum Reinigen von brennbarem Gas (G), insbesondere von Schwelgas (SG), mit einem Gaswäscher (1), der eine Zuleitung (la) für das Gas (G), eine Zuleitung (1b) für ein Waschmedium (W) und eine Ableitung (1c) für Kondensat (K) aufweist und mit einer Ableitung (6) für gewaschenes Gas (Reingas) (R) in Verbindung steht, **dadurch gekennzeichnet,** daß die Ableitung (1c) für Kondensat (K) mit einer Destillationsvorrichtung (4) in Verbindung steht, von der eine Leitung (4a) für flüchtige Bestandteile (F) und eine Leitung (4b) für nicht flüchtige Bestandteile (N) ausgehen, und daß die Leitung (4a) für flüchtige Bestandteile (F) mit der Ableitung (6) für gewaschenes Gas (Reingas) (R) verbunden ist.

5. Einrichtung nach Anspruch 4, **dadurch gekennzeichnet,** daß die Leitung (4b) für nicht flüchtige Bestandteile (N) mit einer Schwelvorrichtung (7) und/oder mit einer Brennvorrichtung verbunden ist.

6. Einrichtung nach einem der Ansprüche 4 oder 5, **dadurch gekennzeichnet**, daß die Ableitung (6) für gewaschenes Gas (Reingas) (R) mit einem Heizgasbrenner (8) verbunden ist.

7. Einrichtung nach Anspruch 6, **dadurch gekennzeichnet,** daß der Heizgasbrenner (8) der Schwelvorrichtung (7) oder der Brennvorrichtung zugeordnet ist.

8. Einrichtung nach einem der Ansprüche 5 bis 7, **dadurch gekennzeichnet**, daß die Schwelvorrichtung (7) eine Schweltrommel einer Schwel-Brenn-Anlage ist.

9. Einrichtung nach einem der Ansprüche 4 bis 8, **dadurch gekennzeichnet,** daß die Ableitung (1c) für Kondensat (K) mit einem Absetzbehälter (2) verbunden ist, von dem auf mittlerem Niveau die Zuleitung (1b) des Gaswäschers (1) für das Waschmedium (W) ausgeht und von dem unten die Ableitung (2a) für überschüssiges Kondensat und oben die Ableitung (6) für gewaschenes Gas (Reingas) (R) ausgehen.

10. Einrichtung nach Anspruch 9, **dadurch gekennzeichnet,** daß die Ableitung (2a) für überschüssiges Kondensat mit einem Hydrozyklon (3) verbunden ist, von dem eine Ableitung (3a) für eine leichtere Fraktion, die in den oberen Teil des Absetzbehälters (2) mündet, und eine Ableitung (3b) für eine schwerere Fraktion, die in den unteren Teil des Absetzbehälters (2) mündet, ausgehen.

11. Einrichtung nach Anspruch 10, **dadurch gekennzeichnet,** daß der Absetzbehälter (2) eine Hauptkammer (2A) und eine Nebenkammer (2B) aufweist, daß die Ableitung (3b) des Hydrozyklons (3) für eine schwerere Fraktion in den unteren Teil der Nebenkammer (2B) mündet und daß die Nebenkammer (2B) einen in die Hauptkammer (2A) mündenden Überlauf (5) aufweist und unten mit einer Ableitung (2b) für überschüssiges Kondensat (U) verbunden ist, die mit der Destillationsvorrichtung (4) in Verbindung steht.

## Claims

1. Process for purifying flammable gas (G), in particular low-temperature carbonization gas (SG), the gas (G) being scrubbed and discharged as pure gas (R), and condensate (K) being discharged, characterized in that the condensate (K, U) is distilled and in that the volatile constituents (F) are admixed to the pure gas (R) and the non-volatile constituents (N) are discharged.

2. Process according to Claim 1, characterized in that the non-volatile constituents (N) are carbonized at low temperature or burned and in that the pure gas (R) as fuel gas provides the heat energy for this purpose.

3. Process according to one of Claims 1 or 2, characterized in that the condensate (K) is separated into a heavy fraction and a light fraction, in that the gas (G) is scrubbed with the light fraction and in that the heavy fraction and the excess light fraction are distilled.

4. Equipment for purifying flammable gas (G), in particular low-temperature carbonization gas (SG), comprising a gas scrubber (1) which has an inlet line (1a) for the gas (G), an inlet line (1b) for a scrubbing medium (W) and a discharge line (1c) for condensate (K) and is connected to a discharge line (6) for scrubbed gas (pure gas) (R), characterized in that the discharge line (1c) for condensate (K) is connected to a distillation unit (4), from which a line (4a) for volatile constituents (F) and a line (4b) for non-volatile constituents (N) start, and in that the line (4a) for volatile constituents (F) is connected to the discharge line (6) for scrubbed gas (pure gas) (R).

5. Equipment according to Claim 4, characterized in that the line (4b) for non-volatile constituents (N) is connected to a low-temperature carbonization unit (7) and/or to a burner unit.

6. Equipment according to one of Claims 4 or 5, characterized in that the discharge line (6) for scrubbed gas (pure gas) (R) is connected to a fuel gas burner (8).

7. Equipment according to Claim 6, characterized in that the fuel gas burner (8) is associated with the low-temperature carbonization unit (7) or the burner unit.

8. Equipment according to one of Claims 5 to 7, characterized in that the low-temperature carbonization unit (7) is a low-temperature carbonization drum of a low-temperature carbonization/burner unit.

9. Equipment according to one of Claims 4 to 8, characterized in that the discharge line (1c) for condensate (K) is connected to a settling vessel (2), from which the inlet line (1b) of the gas scrubber (1) for the scrubbing medium (W) starts at the middle level and from which the discharge line (2a) for excess condensate starts at the bottom and the discharge line (6) for scrubbed gas (pure gas) (R) starts at the top.

10. Equipment according to Claim 9, characterized in that the discharge line (2a) for excess condensate is connected to a hydrocyclone (3) from which a discharge line (3a) for a lighter fraction, leading into the upper part of the settling vessel (2), and a discharge line (3b) for a heavier fraction, leading into the lower part of the settling vessel (2), start.

11. Equipment according to Claim 10, characterized in that the settling vessel (2) has a main chamber (2A) and a subsidiary chamber (2B), in that the discharge line (3b) of the hydrocyclone (3) for a heavier fraction leads into the lower part of the subsidiary chamber (2B), and in that the subsidiary chamber (2B) has an overflow (5) leading into the main chamber (2A) and is connected at the bottom to a discharge line (2b) for excess condensate (U), connected to the distillation unit (4).

## Revendications

1. Procédé d'épuration de gaz (G) combustible, notamment de gaz (SG) de distillation lente, qui consiste à laver le gaz (G) et à l'évacuer en tant que gaz épuré (R) et à évacuer le condensat (K), caractérisé en ce qu'il consiste à distiller le condensat (K, U) et à mélanger les constituants (F) volatils au gaz épuré (R) et à évacuer les constituants non volatils (N).

2. Procédé suivant la revendication 1, caractérisé en ce qu'il consiste à faire subir aux constituants non volatils (N) une distillation lente ou une combustion et à ce que le gaz (R) épuré fournisse pour cela de l'énergie calorifique en tant que gaz de chauffage.

3. Procédé suivant l'une des revendications 1 ou 2, caractérisé en ce qu'il consiste à séparer le condensat (K) en une fraction lourde et en une fraction légère, à laver le gaz (G) par la fraction légère et à distiller la fraction lourde et la fraction légère en excès.

4. Installation d'épuration de gaz (G) combustible, notamment de gaz (G) de distillation lente, comprenant un laveur (1) à gaz qui comporte un conduit d'entrée (1a) pour le gaz (G), un conduit d'entrée (1b) pour un fluide (W) de lavage et un conduit de sortie (1c) pour le condensat et qui communique avec un conduit (6) d'évacuation du gaz lavé (gaz épuré) (R), caractérisée en ce que le conduit (1c) d'évacuation pour le condensat (K) communique avec un dispositif de distillation (4) duquel partent un conduit (4a) pour des constituants volatils (F) et un conduit (4b) pour des constituants non volatils (N), et en ce que le conduit (4a) pour des constituants volatils (F) communique avec le conduit (6) d'évacuation du gaz lavé (gaz épuré) (R).

5. Installation suivant la revendication 4, caractérisée en ce que le conduit (4b) pour des constituants (N) non volatils communique avec un dispositif (7) de distillation lente et/ou avec un dispositif de combustion.

6. Dispositif suivant l'une des revendications 4 ou 5, caractérisé en ce que le conduit (6) d'évacuation pour le gaz lavé (gaz épuré) (R) communique avec un brûleur (8) de gaz de chauffage.

7. Installation suivant la revendication 6, caractérisée en ce que le brûleur (8) du gaz de chauffage est associé au dispositif (7) de distillation lente ou au dispositif de combustion.

8. Installation suivant l'une des revendications 5 à 7, caractérisée en ce que le dispositif (7) de distillation lente est une installation à tambour de distillation lente ou une installation de distillation lente-combustion.

9. Installation suivant l'une des revendications 4 à 8, caractérisée en ce que le conduit (1c) d'évacuation du condensat (K) communique avec un réservoir (2) de décantation duquel partent à un niveau intermédiaire le conduit (1b) d'entrée du laveur (1) à gaz pour le fluide (W) de lavage, en bas le conduit (2a) d'évacuation du condensat en excès et en haut le conduit (6) d'évacuation du gaz lavé (gaz épuré) (R).

10. Installation suivant la revendication 9, caractérisé en ce que le conduit (2a) d'évacuation du condensat en excès communique avec un hydrocyclone (3), duquel part un conduit (3a) d'évacuation d'une fraction légère qui débouche dans la partie supérieure du réservoir (2) de décantation et un conduit (3b) d'évacuation d'une fraction lourde qui débouche dans la partie inférieure du réservoir (2b) de décantation.

11. Installation suivant la revendication 10, caractérisée en ce que le réservoir (2) de décantation comporte une chambre (2a) principale et une chambre (2b) secondaire, en ce que le conduit (3b) de l'hydrocyclone (3) pour l'évacuation d'une fraction lourde débouche dans la partie inférieure de la chambre (2b) auxiliaire et en ce que la chambre (2b) auxiliaire comporte un trop-plein (5) débouchant dans la chambre (2a) principale et communique en bas avec un conduit (2b) d'évacuation du condensat (U) en excès qui communique avec le dispositif (4) de distillation.
